# EUROPEAN PATENT APPLICATION

(11) **EP 4 145 684 A1**
(43) Date of publication of application: **08.03.2023**
(21) Application number: 21195002.7
(22) Date of filing: 06.09.2021
(51) Int. Cl.: H02K 3/34, H02K 9/19, H02K 1/20, H02K 1/32

(54) **DIRECT COOLED ELECTRIC MOTOR**

(71) Applicant: MAHLE International GmbH, 70376 Stuttgart (DE)
(72) Inventor: SEVER, Peter, 9000 Murska Sobota (SI)
(74) Representative: BRP Renaud & Partner mbB Rechtsanwälte Patentanwälte Steuerberater

(57) **Abstract**

A direct cooled electric motor (9) for a traction drive of an electric vehicle, adapted to be cooled by a coolant, comprises a housing (1) receiving a stator core (2), the stator core (2) comprising a steel lamination stack, a rotor (3) arranged to rotate radially inside the stator core (2), and windings (7) which extend axially through the stator core (2) and axially beyond the axial ends (8) of the stator core (2), and at least one end fiber (6), whereby the end fiber (6) extends in the circumferential and radial directions over an axial end (8) of the stator core (2) and comprises a plurality of winding apertures (6c) arranged circumferentially around the end fiber (6), whereby the windings (7) extend through the winding apertures (6c).

## Description

### Technical Field

The main object of the invention relates to the methods and apparatus for increasing the cooling performance of direct cooled electric motor.

### Background Art

Direct cooled electric motors for traction drives of electric vehicles in range between few kW and 1MW of power are having at least the portion of winding in particular in the area of the overhang in direct contact with coolant, and are well known from prior art.

The solution according to the JP2001103700A discloses a stator with flange type of plastic coil holder (i.e. end fiber) abutting against the surface of the stator main body. The main purpose of the plastic flange in case of hairpin winding is to support the conductors during the bending process with aim to form the coils of the stator windings by bending the wires into final shape for welding. In its basic shape the end fiber is a disc or ring-shaped component where its contour essentially matches the contour of the stator lamination, especially regarding the size and number of the slots into which the conductors of the windings are introduced. The manufacture of stators with hairpin, i-pin, or continuous windings is well known in the prior art thus details are not explained within this application.

The key disadvantage of solutions from prior art of direct cooled electric motors is the lack of solution for controlling the coolant flow behavior during electric motor operation, in particular in the area of an airgap between stator and rotor of electric motor, hence noticeable amount of coolant enters into the airgap where drag force is generated by means of hydraulic friction and viscosity effects.

### Summary of Invention

Direct cooled electric motors offer exceptional cooling performance where high ratio of continuous and peak power ratio is easily to be achieved. However, since the thermal performance of the direct cooling is depended on the level of coolant within the electric motor enclosure, it is not unusual that the level of coolant during operation of the electric motor is above the area of the air gap between the stator and rotor, especially for electric motors known as wet runners, where the outer surface of the rotor core is in direct contact with the coolant to propel and splash the coolant into the area of the winding ends with aim to remove the heat out of the exposed copper wires.

The expression "Direct cooling" for the purposes of this application refers to a cooling wherein the heat generated by the electric motor is removed by cooling fluid which is in direct contact with parts of the stator including at least a winding head. That is the individual wires of the winding head an axial end of the stator are in contact with the cooing fluid, although the individual wires may have an insulating coating.

The direct cooled electric motor according to the invention as defined in claim 1 has the objective to improved efficiency or manufacturability of direct cooled electric motors.

The proposed solution is to provide a direct cooled electric motor for a traction drive of an electric vehicle, adapted to be cooled by a cooling fluid, which can be a mixture of a dielectric fluid and air. The direct cooled electric motor comprising a housing receiving a stator core, the stator core comprising a steel lamination stack, a rotor arranged to rotate radially inside the stator core about a rotational axis, and windings which extend axially through the stator core and axially beyond the axial ends of the stator core, and at least one end fiber, whereby the respective end fiber extends in the circumferential and radial directions over, i.e. along an end of the stator core. Said end fiber in particular can be ring shaped or, respectively, forms a ring. Said end fiber comprises a plurality of winding apertures arranged circumferentially around the end fiber, whereby the windings extend through the winding apertures, and wherein the inner diameter of the end fiber is smaller than the outer diameter of the rotor core. Accordingly, the end fiber at its inner edge extends radially beyond the rotor and radially overlaps the rotor.

The axial direction is parallel with a rotation axis of the rotor, and the radial and circumferential directions are relative to the rotation axis of the rotor.

The end fiber thus has the additional function and advantage of hindering flow into a radial gap between the rotor and the stator. This is particularly advantageous in an embodiment whereby a coolant chamber is provided adjacent to the end fiber, and the coolant is pressurized to force it through axial cooling channels in the stator core. Alternatively if the electric motor is a flooded motor, whereby the coolant level can be raised above the level of the radial gap between the stator core and the rotor, extending the reach of the coolant to the rotor and/or stator parts, the total efficiency of electric motor is therefore increased due to the reduced drag losses generated by the rotor, especially at higher rotational speeds, as there less coolant enters the gap between the rotor and the stator core from the axial end of the stator.

The end fiber is adapted to support the wires or the windings during the bending process when the winding heads are formed, whereby the supporting structure also provides at least one passage for coolant flow to the stator core.

According to a preferred embodiment an end fiber axial clearance between the end fiber and the rotor is smaller than the half of the difference between the outer diameter of the rotor core and the inner diameter of the end fiber. Said axial clearance for example may be in the range of between 0,3mm and 15mm.

The end fiber may further comprise an airgap flow deflector in proximity to the airgap between the stator core and rotor. Said airgap flow deflector preferably converges towards the rotor to the inner diameter of the end fiber. An end fiber radial clearance between a radially inner edge of the end fiber and the rotor can be equal to or smaller than an end fiber axial clearance between the end fiber and the rotor and preferably can be in the range between 0,3mm and 15mm. The airgap flow deflect has at least one inclined or chamfered and in particular conical surface. The least one inclined or conical surface is preferably arranged for guiding coolant flow in a generally axial direction. Alternatively or additionally at least one deflection surface can be provided for deflecting the coolant away from rotating parts of the electric motor, wherein deflection angle β is in range between 0° and 90°, and more preferably in the range between 10° and 80°, whereby the deflection angle β is defined as the angle between the deflection surface and the radial direction.

The end fiber can form part of an airgap labyrinth seal arranged in proximity to a radial gap between the rotor and the stator, whereby rotational counterparts of the labyrinth seal are provided by the rotor core, wherein the end fiber axial clearance and the end fiber radial clearance may in particular be in the range between 0,3mm and 15mm. The provision of a labyrinth seal, for sealing the gap between the rotor and the stator more effectively hinders coolant from entering the gap between the stator core and the rotor.

The end fiber can comprise at least one first recess forming a coolant passage between the end fiber and the stator core. The width of the coolant passage in the axial direction is preferably equal to or preferably smaller than an axial clearance between the end fiber and the rotor and may in particular be in range of between 0,3mm and 15mm. The end fiber thus has the additional function of providing a path for a coolant.

Advantageously the stator core can comprise at least two cooling channels extending axially through the stator core, whereby the recess forming the coolant passage fluidly connects at least two of the at least two cooling channels with each other, or fluidly connecting the at least one of the cooling channels with a coolant outlet of the electric motor or with a cooling inlet of the electric motor. The at least two cooling channels can be fluidly connected in series and the coolant passage can therefore fluidly connect the at least two cooling channels so that a coolant can flow in opposite directions axially through the stator core. The end fiber therefore has the additional function of guiding a return coolant through the stator.

In another embodiment, the end fiber further comprises a plurality of second recess grooves extending in the radial direction and connecting the coolant passage formed by the at least one first recess with cooling channels extending axially through the stator core in a radially inner part of the stator core, i.e. in the area of the stator teeth radially inside of a yoke portion.

The end fiber can comprise at least one radially outer contact surface contacting and preferably providing a seal with the housing. The end fiber can therefore act as a dividing wall separating two coolant chambers in communication with the housing.

The end fiber can comprise a connecting surface to match the contact surface of another component of electric motor, in particular an end plate.

The end fiber can also comprise a non-spill edge or axially extending lip extending circumferentially around the end fiber, or extending around the apertures for limiting the varnish to enter into the area of a cooling channel during a trickling process for the windings (i.e. when applying an electrical insulation coating over the local area of welding points or over the complete windings).

For providing a reference datum position during installation to the stator core the end fiber can comprise at least one positioning pin projecting, preferably axially, from the end fiber for location of the end fiber in position with respect to the stator core. The slot openings of the stator core can therefore be easily aligned with winding apertures in the end fiber.

In an advantageous embodiment the rotor comprises an impeller for inducing coolant flow past the windings and/or through at least one cooling channel in the stator whereby the impeller comprises a plurality of blades and a lip or a groove cooperating with the end fiber to form a seal, or in the case of a labyrinth seal forming part of the airgap labyrinth seal.

The end fiber can be advantageously made out of plastic, preferably a thermoset material.

The end fiber can be manufactured as a standalone component by an injection molding process, wherein at least main body of said end fiber is preferably made out of PPS material, wherein PPS stands for polyphenylene sulfide.

The end fiber can alternatively be manufactured by overmolding part of the stator core. This provides for a cost effect manufacture.

The coolant used is preferably a mixture of dielectric oil and air. Therefore, additional electric insulation or insulation against corrosion of vital parts for electric motor is not needed. The stator core, the rotor, the windings and the end fiber are preferably all exposed to and in direct contact with coolant.

In the continuation, the essence of the invention is described in more detail with the help of the accompanying drawings and with an explanation of the preferred and alternative embodiments.

### Brief Description of Drawings

**Figure 1** shows a cross section for a preferred embodiment of a direct cooled electric motor according to the invention.
**Figure 2** shows a detailed view A as indicated on figure 1.

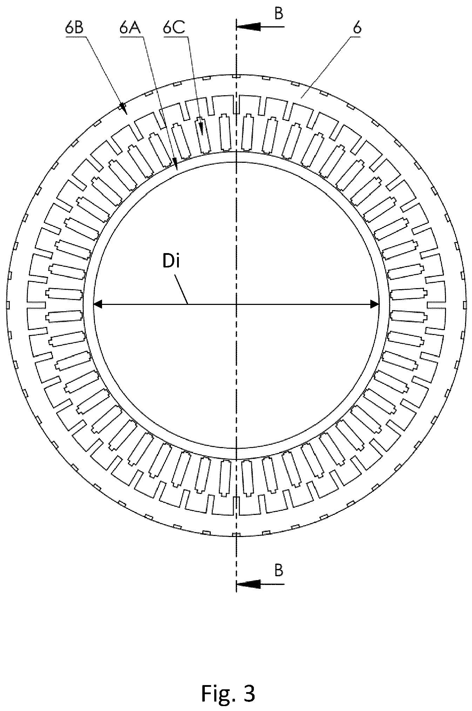

**Figure 3** shows an end fiber according to the invention in the back view facing towards stator core,

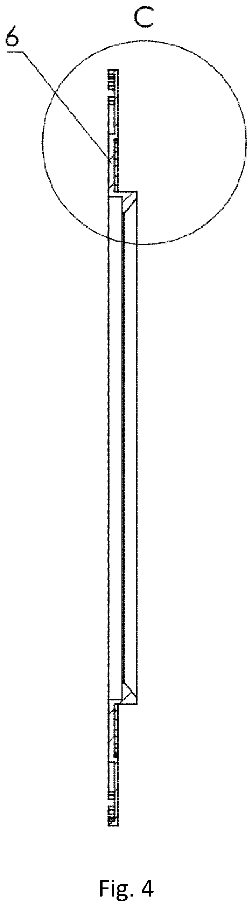

**Figure 4** shows the end fiber in cross section view B-B of figure 3,
**Figure 5** shows the end fiber in detailed view of C in 4.

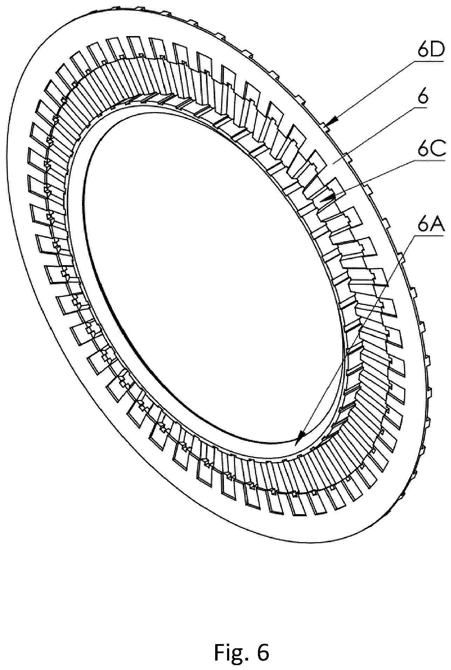

**Figure 6** shows an end fiber according to the invention in isometric view,
**Figure 7** shows an end fiber according to the invention in isometric view, viewed from the side of the stator.
**Figure 8** shows a detailed view of electric motor without housing.
**Figure 9** shows another embodiment of end fiber according to the invention,
**Figure 10** shows a detailed view of the embodiment of the end fiber in figure 9
**Figure 11** shows another exemplary embodiment of the direct cooled electric motor according to the invention in the region of an end fiber.

### Description of Embodiments

With reference to the figures, a direct cooled electric motor 9 comprises a stator core 2 with hairpin windings 7, where solid conductors are inserted into stator core 2 slot openings (not shown) extending in the axial direction through the stator core 2. The stator core 2 is made from a stack of steel laminations. With aim to install the wires of the windings 7 into the stator slot, an end fiber 6 comprises plurality of windings apertures 6C where the number, size and position of the winding aperture 6C are adapted and matched to the layout of the stator core 2 (i.e. electromagnetic design of the stator).

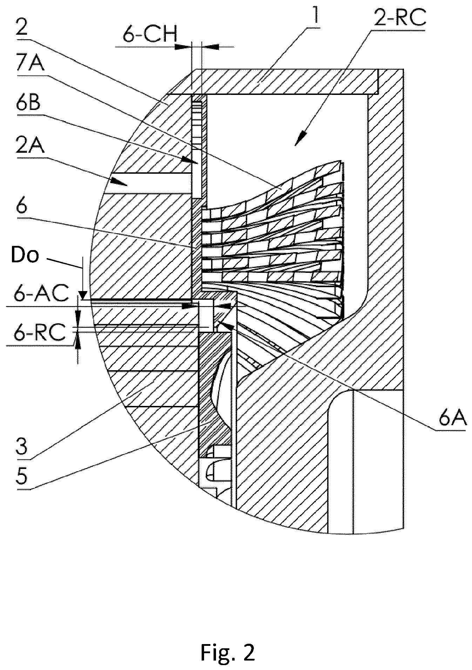

There are several types of the hairpin technologies (i.e. hairpins with welding points on one side, hairpins with welding points on both sides of the stator 2, I-pin windings, wave windings etc.), with well-known advantages and disadvantages. Since the windings 7 are not considered to be the object of this invention, the type of windings is not limited to nor explained in a broader manner within this application. From objectives for invention point of view it is important to understand that the primary function of the end fiber 6 is to support the conductors of the windings 7 during installation of the wires (i.e. individual hairpins) into the stator 2 slots, especially during the process of bending the hairpins on a welding side at an axial end 8 of the stator core 2, where hairpins are bended and twisted into their final position within end-winding overhang (or winding head) 7A (see fig. 2), and wherein the individual hairpins are positioned, connected and welded together according to the target electromagnetic windings scheme.

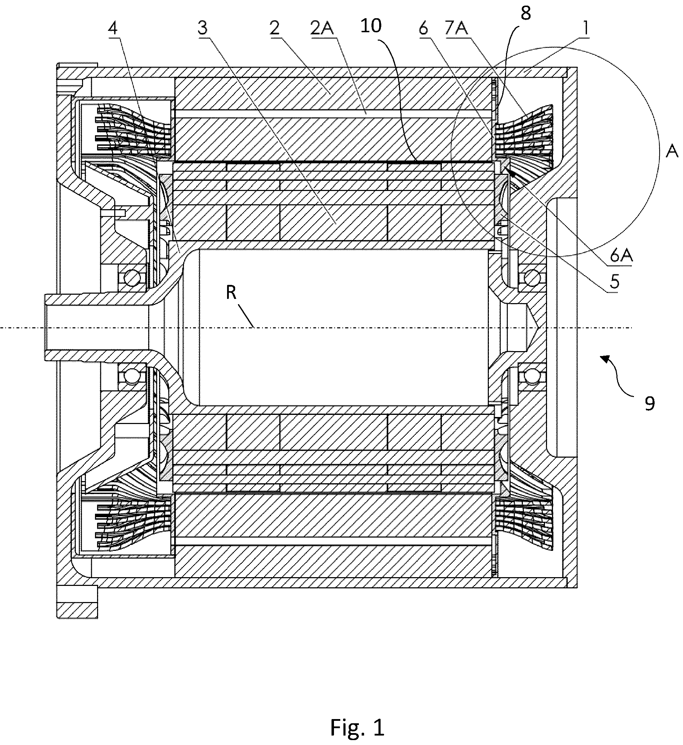

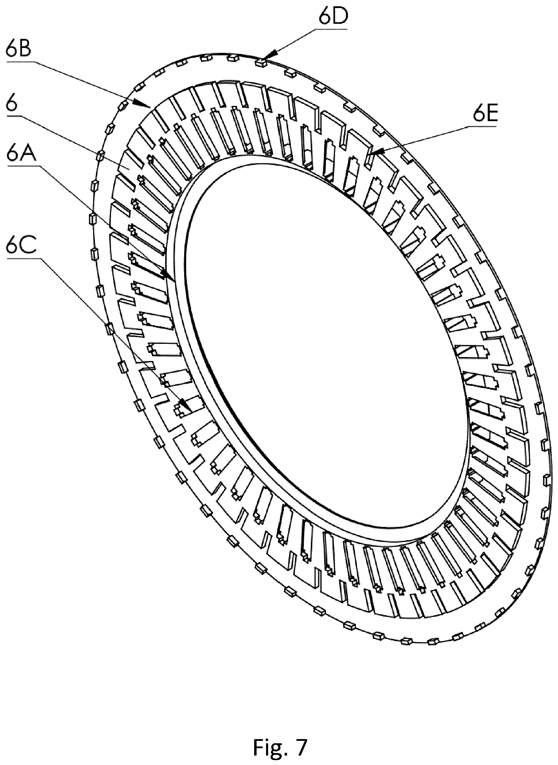

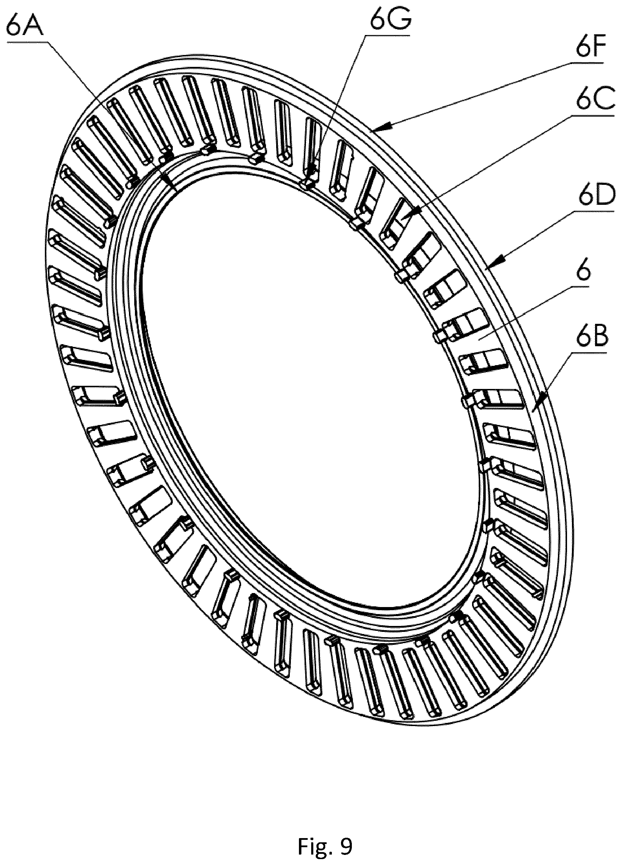

From electric motor cooling system point of view, the stator core 2 designed for direct cooling preferably comprises plurality of hole-like cooling channels 2A within the stator 2 core (i.e. stack of laminated sheets of electric steel), where cooling channels 2A are provided in the area of a stator slot, between the wires, stator tooth, and/or in stator yoke area. In an advantageous embodiment, the stator core 2 comprises plurality of groove-like cooling channels 2A' on the outer surface of the stator core 2, where the channels needed for coolant flow utilization are provided in cooperation of stator core 2 and electric motor enclosure 1. In an advantageous embodiment of electric motor 9 as depicted on figure 1, the coolant is released out of the shaft 4 and propelled through the series of cooling channels 2A, 2A' by the pumping power provided with the impeller 5 arranged on the rotor 3 of the electric motor 9, wherein the coolant is preferably pumped from one side of the stator core 2 to the other side of the stator core 2 through the system of cooling channels 2A, 2A' being operably connected in combination of parallel and serial connections. For coolant flow utilization, the end fiber 6 comprises a recess on the side facing the stator core 2, whereby the recess forms a coolant passage 6B together with the stator core 2. is provided where the width 6-CH of the coolant passage 6B in the axial direction is between 0,3mm and 15mm. In another embodiment shown in figure 7, the end fiber 6 further comprises additional recess grooves 6E extending in the radial direction and connecting the coolant passage 6B with cooling channels 2A extending axially through the stator core 2 in a radially inner part of the stator core 2, i.e. in the area of the stator teeth radially inside of a yoke portion. It is important to notice, that end fiber 6 in alternative embodiments comprises one or more contact surfaces 6D (see fig. 9) with aim to divide the chamber 2RC (see fig. 2) on one end 9 of the stator core 2 into two or more chambers for sake of coolant flow path utilization, whereby a return chamber, and/or collecting chamber are provided by said segment of end fiber 6 in combination with other components of the electric motor 9.

In order to reduces the viscous drag effects of a wet runner cooling system for a direct cooled electric motor, the end fiber provides a non-contact flow barrier in the area of the entrance to the radial air gap 10 between the rotor and the stator core 2. This is especially important in the range of high rotational speeds of the rotor (i.e. circumferential speed of the rotor 3 outer surface is above 100m/s). As previously mentioned, the rotor 3 of electric motor in advantageous design comprises the impeller 5 for providing a pumping power to propel the coolant through the cooling system of the electric motor. In preferred embodiment the impeller comprises plurality of backwardly inclined blades with tangential outlet aperture. However, to reduce the amount of oil which enters into the area of the airgap between stator core 2 and rotor 3, the end fiber 6 in advantageous embodiment comprises an airgap flow deflector 6A, where the inner diameter of the airgap flow deflector 6A is essentially smaller than the outer diameter of the rotor 3 in the region of the radial air gap 10. Therefore, the end fiber 6 provides a radial overlap at the respective axial end of the rotor 3 overlapping said radial gab 10.

Accordingly, an inner diameter of the airgap flow deflector 6A complies with an inner diameter Di of the end fiber 6 and is smaller than an outer diameter Do of the impeller 5 on the rotor core 3, hence the end fiber axial clearance 6-AC (see fig. 2) between parts of the end fiber 6 and axially adjacent parts of the rotor 3 and end fiber radial clearance 6-RC between parts of the end fiber 6 and radially adjacent parts of rotor 3 are provided with aim to avoid friction between rotating and stationary parts of electric motor, wherein the end fiber axial clearance 6-AC and end fiber radial clearance 6-RC are in range between 0,3 and 15mm.

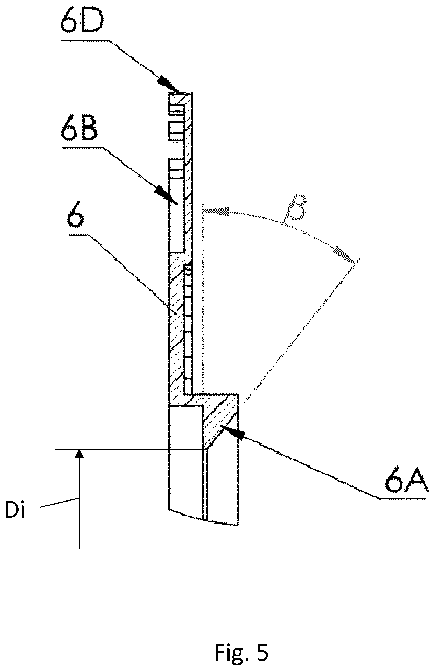

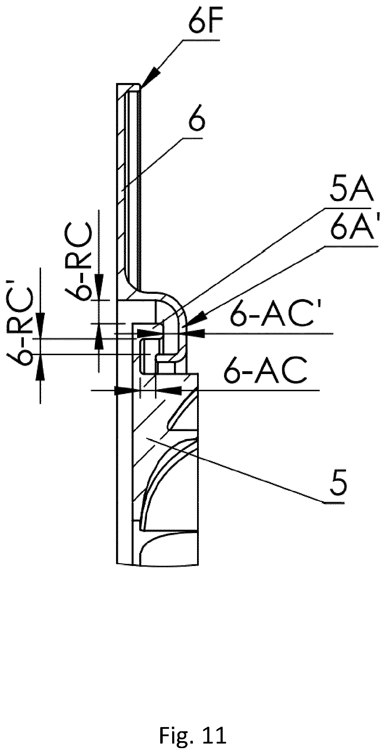

In another embodiment shown in figure 11, the airgap flow deflector 6A is modified into the type of an airgap labyrinth seal 6A', where rotational counterparts of the labyrinth seal are provided by a rotating groove 5A forming part of the impeller 5 or balancing rings for the rotor core 3, wherein end fiber axial clearance 6-AC, 6AC' and end fiber radial clearance 6-RC, 6RC' are maintained in all areas between stationary and rotational parts of electric motor. Nevertheless, if the end fiber 6 comprises the airgap flow deflector 6A or airgap labyrinth seal 6A', the inclination of the target deflection surface and hence deflection angle β is in range between 0° and 90°, preferably between 10° and 80°, and more preferably between 30° and 60°, in which case the flow deflector 6A comprises a conical or frustoconical surface. The deflection angle β is defined as the angle between the deflection surface and the radial direction as shown in figure 5. In other words, the deflection angle β is measured in an axial plane, in which the rotational axis R of the rotor 3 extends, and between the deflection surface and a radial plane extending perpendicular to the rotational axis R of the rotor 3.

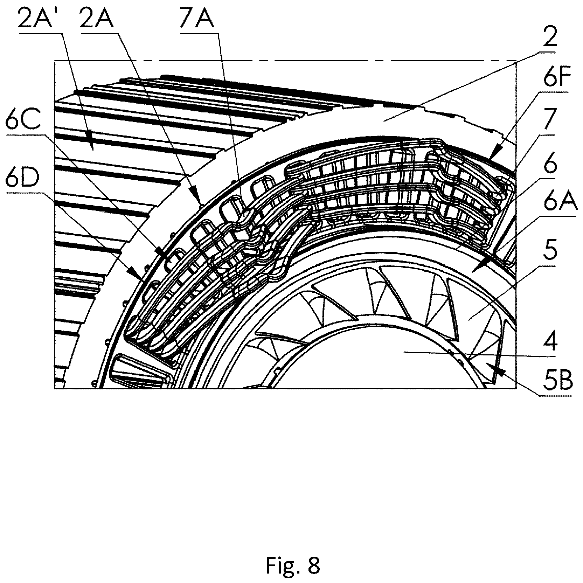

Figure 8 shows a detailed view of electric motor 9 without housing, where for sake of clarity of the picture only one set of wires within a single slot are shown. It can be seen that a cooling groove 2A' is provided on the outer surface of the stator core 2 for providing a channel for coolant flow on the outer side of the stator 2 in combination with housing 1 of the electric motor 9.

The shaft 4, impeller 5 with plurality of blades 5B, end fiber 6 with portion in function of airgap flow deflector 6A, winding aperture 6C, contact surface 6D, non-spill edge 6F, windings 7 and windings head overhang 7A is also visible in figure 8.

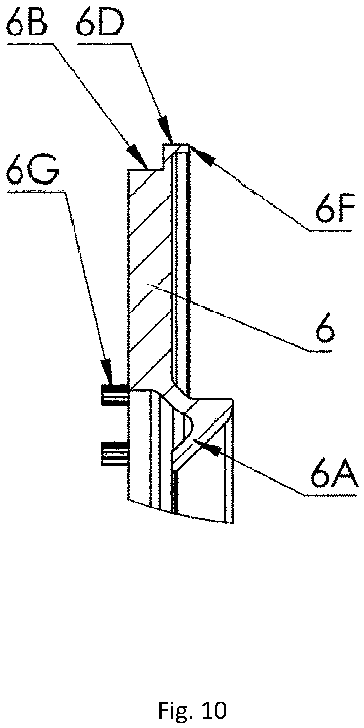

In an advantageous embodiment, the end fiber 6 is a standalone component manufactured by injection molding, made out of plastic, preferably PPS. For providing a reference datum position during installation to the stator core 2, the end fiber 6 comprises at least one positioning pin 6G (see fig. 9) projecting, preferably axially, from the end fiber 6 for location the end fiber 6 in position with respect to the stator core 2. The slot openings of the stator core 2 can therefore be easily aligned with winding apertures 6c in the end fiber 6. In some embodiments, at least key features of the end fiber 6, in particular the airgap flow barrier 6A, is manufactured by overmolding the stator with thermoset material. Similarly, the windings 7 of the electric motor are coated with PEEK insulation, wherein PEEK stands for polyetheretherketone. However, if required, wires of the windings 7 are coated with additional layer of electric insulation (i.e. varnish), where different techniques are to be used. If a trickling process is used, where varnish is poured over the winding ends 7A, the end fiber 6 can comprise a non-spill edge or axially extending lip 6F (see fig. 9 and 10) extending at least partially around the cooling channels 2A or circumferentially around the end fiber 6, with aim to prevent that some cooling channels 2A would be clogged by applied material. Nevertheless, for the state of the art electric motor it is to be considered, that trickling is avoided and if required, only dip and spin process is used, where only a portion of the windings head overhang 7 is dipped into the material to be applied with aim to fixate the wires in the area of the end-windings overhang 7A, wherein even this can be avoided by using a proper, e.g. PEEK or self-bonding wires, insulation for the wires of electric motor windings 7.

## Claims

1. A direct cooled electric motor (9) for a traction drive of an electric vehicle, adapted to be cooled by a coolant, in particular a mixture of a dielectric fluid and air,
- the electric motor (9) comprising a housing (1) receiving a stator core (2), the stator core (2) comprising a steel lamination stack, a rotor (3) arranged to rotate radially inside the stator core (2), and windings (7) which extend axially through the stator core (2) and axially beyond axial ends (8) of the stator core (2), and at least one end fiber (6),
- wherein the end fiber (6) extends in the circumferential direction and in the radial direction over an axial end (8) of the stator core (2) and comprises a plurality of winding apertures (6c) arranged circumferentially around the end fiber (6),
- wherein the windings (7) extend through the winding apertures (6c),
- wherein an inner diameter (Di) of the end fiber (6) is smaller than an outer diameter (Do) of the rotor core (3).

2. The direct cooled electric motor (9) according to claim 1
**characterized in that,**
an end fiber axial clearance (6-AC) between the end fiber (6) and the rotor (3) is smaller than the half of the difference between the outer diameter (Da) of the rotor core (3) and the inner diameter (Di) of the end fiber (6) and/or in the range of between 0,3mm and 15mm.

3. The direct cooled electric motor (9) according to claim 1
**characterized in that,**
the end fiber (6) further comprises an airgap flow deflector (6A) with at least one inclined surface in the area of an airgap (10) between the stator core (2) and rotor (3).

4. The direct cooled electric motor (9) according to claim 3
**characterized in that,**
the airgap flow deflector (6A) converges towards the rotor (3) to the inner diameter (Di) of the end fiber (6).

5. The direct cooled electric motor (9) according to claim 3 or 4
**characterized in that,**
an end fiber radial clearance (6-RC) between a radially inner edge of the end fiber (6) and the rotor (3) is equal to or smaller than an end fiber axial clearance (6-AC) between the end fiber (6) and the rotor (3) and/or is in the range of between 0,3mm and 15mm.

6. The direct cooled electric motor (9) according to any one of claims 1 or 5
**characterized in that,**
the end fiber (6) forms part of an airgap labyrinth seal (6A'), whereby rotational counterparts of the labyrinth seal are provided by said rotor core (3), wherein end fiber axial clearance (6-AC, 6-AC') and end fiber radial clearance (6-RC, 6-RC') are in the range between 0,3mm and 15mm.

7. The direct cooled electric motor (9) according to any one of the preceding claims
**characterized in that,**
said end fiber (6) comprises at least one inclined or chamfered deflection surface (6A) for deflecting the coolant away from rotating parts of the electric motor (9), wherein in an axial plane containing the rotational axis (R) of the rotor (3) a deflection angle (β) of the deflection surface (6A) between a plane extending perpendicular to the rotational axis (R) of the rotor (3) and said deflection surface (6A) is in the range between 0° and 90°, preferably in the range between 10° and 80° and more preferably in the range between 30° and 60°.

8. The direct cooled electric motor (9) according to any one of the preceding claims
**characterized in that,**
said end fiber (6) further comprises a recess forming a coolant passage (6B) between the end fiber (6) and the stator core (2) whereby a width (6-CH) of the coolant passage (6b) in the axial direction is equal to or smaller than an end fiber axial clearance (6-AC) between the end fiber (6) and the rotor (3) and/or is in range of between 0,3mm and 15mm.

9. The direct cooled electric motor (9) according to claim 8
**characterized in that,**
said stator core (2) further comprises at least two cooling channels (2A, 2A') extending axially through the stator core (2), whereby the recess of the coolant passage (6B) fluidly connecting at least two of the at least two cooling channels (2A, 2A') with each other, or fluidly connecting the at least one of the cooling channels (2A, 2A') with a coolant outlet or cooling inlet of the electric motor (9).

10. The direct cooled electric motor (9) according to claim 9
**characterized in that,**
the at least two cooling channels (2A, 2A') are fluidly connected in series and the coolant passage (6B) fluidly connects the at least two cooling channels (2A, 2A') so that a coolant can flow in opposite directions axially through the stator core (2).

11. The direct cooled electric motor (9) according to any one of the preceding claims
**characterized in that,**
the end fiber (6) further comprises at least one radially outer contact surface (6D) contacting and preferably providing a seal with the housing (1).

12. The direct cooled electric motor (9) according to any one of the preceding claims
**characterized in that,**
the rotor (3) comprises an impeller (5) for inducing coolant flow past the windings (7) and/or through at least one cooling channel (2A, 2A') in the stator whereby the impeller (5) comprises a plurality of blades (5B) and a lip or a groove (5A) forming part of the airgap labyrinth seal (6A').

13. The direct cooled electric motor (9) according to any one of the preceding claims
**characterized in that,**
said end fiber (6) is made out of plastic.

14. The direct cooled electric motor (9) according to any one of the preceding claims
**characterized in that,**
said end fiber (6) is manufactured as a standalone component, manufactured by an injection molding process, wherein at least a main body of said end fiber is made out of PPS material.

15. The direct cooled electric motor (9) according to any one of the claims 1 to 13
**characterized in that,**
said end fiber (6) is manufactured as part of a stator core (2) overmolding structure made out of a thermoset material.

16. The direct cooled electric motor (9) according to any one of the preceding claims
**characterized in that,**
said stator core (2), said rotor (3), said windings (7) and said end fiber (6) are exposed and are in direct contact with the coolant, wherein the coolant is a mixture of dielectric oil and air.
